# EUROPEAN PATENT SPECIFICATION

(11) **EP 2 530 884 B1**
(45) Date of publication and mention of the grant of the patent: **25.04.2018**
(21) Application number: 11168661.4
(22) Date of filing: 03.06.2011
(51) Int. Cl.: H04L 12/851

(54) **METHOD, APPARATUS AND SYSTEM FOR TRIGGERING AND/OR ENABLING QOS SUPPORT FOR SELECTED APPLICATIONS IN IP BASED NETWORKS**
VERFAHREN, VORRICHTUNG UND SYSTEM ZUM AUSLÖSEN UND/ODER AKTIVIEREN VON QOS-UNTERSTÜTZUNG FÜR AUSGEWÄHLTE ANWENDUNGEN IN IP-BASIERTEN NETZWERKEN
PROCÉDÉ, APPAREIL ET SYSTÈME DE DÉCLENCHEMENT ET/OU ACTIVATION DE SUPPORT QOS POUR APPLICATIONS SÉLECTIONNÉES DANS DES RÉSEAUX IP

(43) Date of publication of application: 05.12.2012
(73) Proprietor: Deutsche Telekom AG, 53113 Bonn (DE)
(72) Inventor: Korthals, Isabelle, D-10587 Berlin (DE); Einsiedler, Hans-Joachim, D-13189 Berlin (DE); Roos, Andreas, D-64354 Reinheim (DE); Bayer, Nico, D-61231 Bad Nauheim (DE); Sivchenko, Dimitry, D-64285 Darmstradt (DE)
(74) Representative: Vossius & Partner Patentanwälte Rechtsanwälte mbB

(56) References cited:
- US-A1- 2006 149 845
- US-A1- 2007 211 738
- US-B1- 6 788 647

## Description

### Technical Field

The present invention relates to a method, apparatus and system to implement QoS support for selected services in IP based networks. The invention specifically relates to a method, apparatus and system for triggering and/or enabling QoS support for selected applications by means of a QoS proxy which is configured by a network operator.

### Background Art

Available IP networks, e.g. of a network operator usually implement mechanisms for QoS support. For instance, these QoS mechanisms may be based on differentiation of IP packets on selected routers at edges of the operator's network while putting them into different pipes/tunnels based on MPLS or VLAN labels. QoS differentiation is then for instance implemented by using different scheduler priorities or shaping rules for different pipes/queues. In principle the differentiation/classification of the packets is done at the ingress router, where special rules and profiles are applied to mark the respective packets. Afterwards the packets are distributed into different queues and are scheduled according to these rules/profiles. Remarking and classification are not done in the interior routers within the core. This is done only at egress and ingress level.

Reference [1] relates to QoS of Network Service Providers (NSP) which try to offer the best QoS that adapts to the requirements of their customers applications. The selected service model should be low-cost as well as able to provide good and differentiated quality. To meet these requirements over IP networks, Differentiated Services (DiffServ) have recently been proposed for the purposes of being able to offer a range of different Classes of Service (CoS) to different customers.

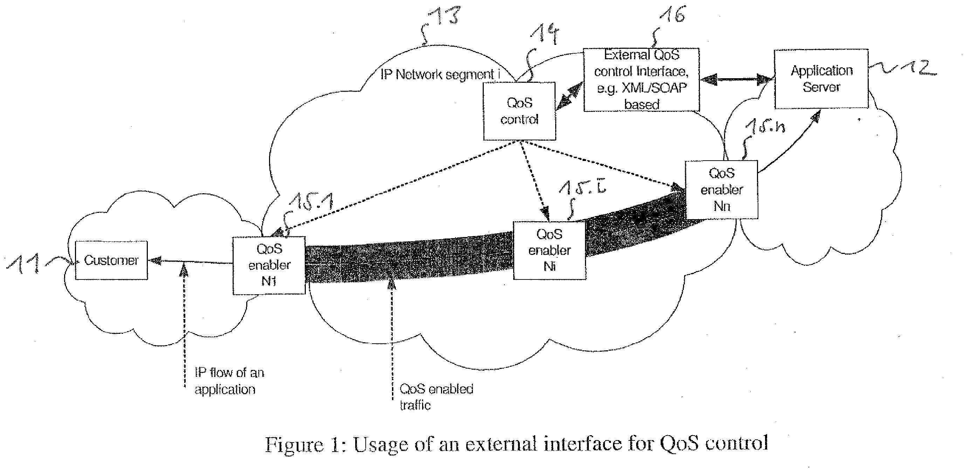

Any other QoS mechanism can also be applied in the network - either in core or in access. Available QoS mechanisms are usually configured statically which means that classification rules are pre-defined and use pre-defined IP addresses or/and port numbers. Theoretically, traffic classification could also be based on the Type of Service (TOS) field of the IP header. Nowadays it is renamed to the Differentiated Services Code Point (DSCP). However, this is not a common praxis in real networks as the TOS field is set by the application and therefore is not under the control of the network operator. In real networks, traffic classification is usually based on IP addresses and port numbers. This means that QoS provisioning for applications with static IP or port numbers can easily be implemented in this way. However, static configuration does not work properly in the case the IP addresses or the port numbers of IP flows change. A typical example of such a case is video streaming, e.g. provided by a number of application provider in today's Internet, where source IP address and destination port number can be very dynamic depending on used streaming server and client. In order to enable QoS support for such services in IP networks, an external interface is typically implemented and offered for services for which QoS must be supported in the network. US 2006/149845 A1 shows a system for per-user or per-application managing of QoS provided wherein a QoS proxy is implemented on a computing device or content server. Fig. 1 shows a typical implementation of such an interface. A network segment i having reference numeral 13 supporting QoS has a number of QoS enforcement points. These QoS enforcement points are shown in Fig.1 as QoS enabler N1, ..., Ni, ...Nn having reference numerals 15.1, 15.i, 15.n. These nodes are controlled by a QoS controller 14 configuring policies of QoS enablers 15.1, 15.i, 15.n. Particular protocols can be applied between the QoS control node 14 and the QoS enablers. An external QoS control interface 16 is offered by the QoS control node 14. Different implementations can be used for this external interface 16, for example based on a network protocol, e.g. XML/SOAP. When a customer initiates a session with an application server 12 providing an application service the application server 12 uses the QoS control interface 16 offered by the network provider to configure/request/order and to initiate QoS support for IP flows between the application server 12 and customer 11. After successful installation of appropriate rules and classifiers on QoS enabler nodes traffic exchange begins. Appropriate mechanisms, depending on the QoS support in impacted network segment, apply and QoS is supported for new IP flow/-s in the controlled network segment. When all network segments between customer and application server can be controlled and offer QoS mechanisms, also based on different implementations, end-to-end QoS can be supported.

The problem of this approach is that both, network operator and operator of application servers offering an application service have to agree on the used interface and its implementation. To avoid introduction of multiple different interfaces by different network operators and application services, the control interface should be standardised. Currently the work for the definition and standardisation of such interfaces is ongoing in different projects and standardisation bodies, e.g. references [2], [3], [4], and [5]. It will however still take additional time for the finalisation of these standardisation activities as well as for the implementation. It means that this option is rather a mid-term solution.

### References:

[1] Antonio J. Elizondo, Mara L. Garca, Hans Joachim Einsiedler, Rudolf Roth, Michael Smirnov, Maurizio Bartoli, Paolo Castelli, Balzs Varga, and Magnus Krampell, "Service Models and Realisation of Differentiated Services Networks", In ITCOM 2001 - The Convergence of Information Technologies and Communications, Denver, Colorado, USA, August 19-24 2001
[2] GSM World, "GSMA OneAPI," March 2011. [Online]. Available: (http://www.gsmworld.com/oneapi/)
[3] Open Mobile Alliance, "Next Generation Service Interfaces Architecture," last access 08.03.2011. [Online]. Available:
   (http://member.openmobilealliance.org/ftp/Public_documents/ARCH/Permanent_documents/OMA-AD-NGSI-V1_0-20100401-D.zip)
[4] European collaborative research project, "Economics and Technologies for Inter-Carrier Services (ETICS)," March 2011. [Online]. Available: (https://www.ict-etics.eu)
[5] Internet Engineering Task Force (IETF), Differentiated Services (diffserv) working group (http://datatracker.ietf.org/wg/diffserv/charter/)

More examples of the prior art can be found in US2007/211738 and in US2006/149845 and US6788647.

### Disclosure of the Invention

It is an objective of the present invention to provide a method, apparatus and system for implementing QoS support for selected services in IP based networks and more particularly to provide a method, apparatus and system for triggering and/or enabling QoS support for selected applications that provide an improved QoS support.

This objective is achieved with the features of the independent claims. The dependent claims relate to further aspects of the present invention.

One aspect of the present invention relates to a method for triggering and/or enabling QoS support for selected applications in IP based networks. An analysis of application signalling on a QoS dedicated QoS proxy node is provided via an interface. The QoS proxy node is configured to intercept IP packets with signalling information used to control network services. The QoS proxy node is further configured to analyze intercepted IP packets in order to extract, derive and utilize signalling information of applications by means of IP packet classifiers whereby deep packet inspection is optionally applied for certain IP packets, if needed.

One aspect of the present invention relates to creating appropriate IP packet classifiers corresponding to a format of a message, wherein the signalling of an application is preferably based on IP based protocols, preferably network protocols, e.g. HTTP (hypertext transfer protocol), SIP (session initiation protocol) or TCP (transmission control protocol).

According to one aspect of the present invention IP packets with application signalling go through the same network segments, domains and network elements, e.g. routers or gateways, as the IP data flows of the requested network application.

According to another aspect the QoS proxy functionality is implemented on a node within a network segment, more specifically the QoS proxy functionality is collocated with a QoS control node or preferably installed on a separate node, for example a QoS proxy node.

One further aspect of the present invention relates to providing specific packet inspection classifiers to the QoS proxy node based on local policies associated with the QoS proxy functionality. These are installed on the QoS proxy node. The local policies are configured by a network operator in accordance with an agreement with application providers regarding QoS support for these applications and/or in accordance with an agreement with customers to enable QoS support for their intentions. The QoS proxy node is operated and controlled by the configured policies.

One aspect of the present invention relates to triggering the QoS control node and controlling one or more enabler nodes. The QoS control node is triggered from the QoS proxy node via an interface. The interface is preferably either proprietary or standardized and/or may be applied operator-intern or operator extern to exchange control information with other operators or with application services providers. The QoS enabler nodes performing QoS enforcement in the operator network are controlled by means of the QoS control node.

One aspect of the present invention relates to the QoS support execution. The QoS support execution and its associated policies are based on traffic engineering/management mechanisms, preferably traffic shaping, and or queuing policies.

One aspect of the present invention refers to the signalling between customer and another application peer. Said signalling can be modified by the QoS proxy node in order to inform the customer about insufficient network resources and/or to initiate new application sessions and/or to modify established application sessions. This may be done in case the required/requested QoS level cannot be supported in the network due to the insufficient network resources, for example an insufficient IP throughput in the customer access network.

One aspect of the present invention relates to the installed classifiers. Those can be deleted preferably by the QoS proxy node if at least one of the following conditions is present: (a) after detection of signalling termination of an established application, (b) after a timeout indicating that no further IP packets of the application are exchanged in the network, (c) after a predefined time of classifier life cycle and (d) based on signalling of termination of established application session by an operator, application service provider or customer.

According to another aspect of the invention a request of a prioritised application of a customer is searched for application specific patterns by means of deep packet inspection and/or additional QoS parameters may be obtained by deep packet inspection.

One aspect of the present invention relates to the information identifying IP flows of an application, preferably 5-tuple. This information is extracted from signalling exchanged between a customer and another application peer. The information identifying IP flow or IP flows of established application sessions is transferred to the QoS control node together with QoS requirements.

One further aspect of the present invention relates to the information about the required QoS level. The information about the required QoS level preferably, but not only limited to, IP throughput, delay, jitter is either extracted from application signalling or from available policies, preferably according to application or to user type, received from the operator, application service provider and/or customer.

One other aspect of the present invention relates to the QoS proxy. The QoS proxy comprises means being configured to provide analysis of application signalling on a QoS proxy node for controlling a QoS control node via an interface. The QoS proxy further comprises means being configured to intercept IP packets with signalling information used to control network services. The QoS proxy further comprises means being configured to analyze intercepted IP packets preferably in order to extract, to derive and to utilize signalling information of applications by means of IP packet classifiers and optionally applying deep packet inspection for certain IP packets, if needed.

One additional aspect of the present invention relates to a system for performing the QoS support with a QoS proxy node. The system comprises at least a QoS proxy node, a QoS control node and at least one QoS enabler node that is controlled by the QoS control node.

### Brief Description of the Drawings

The method, apparatus and the related system according to the invention are described in more detail herein below by way of exemplary embodiments and with reference to the attached drawings, in which:
Figure 1 shows a block diagram of a known IP based network using an external interface in order to signalise and enable QoS support for QoS services;
Figure 2 shows an IP based network using a QoS proxy in order to investigate/derive and enable QoS support for QoS services according to the present invention.

### Embodiments of the Invention

The present invention relates to a novel method for triggering QoS support in operator networks being implemented without the need for introduction and implementation of additional external interfaces. This method is based on an additional functionality called QoS proxy.

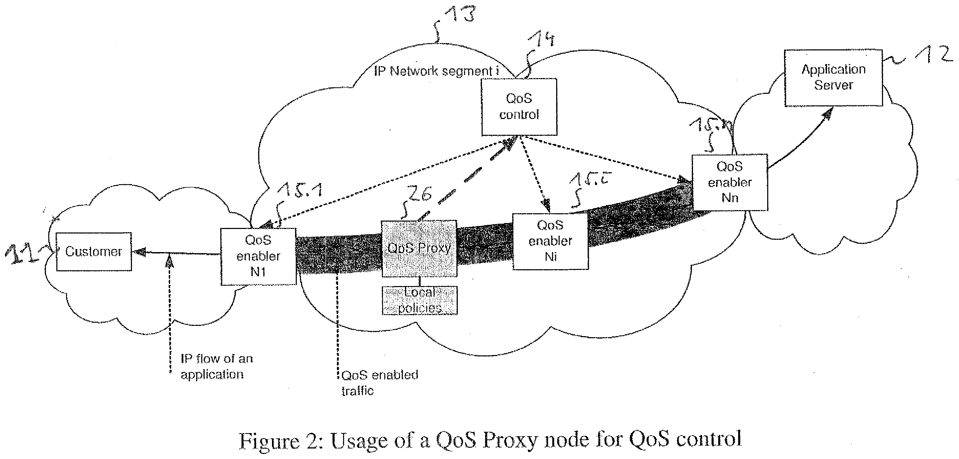

Figure 2 shows an embodiment for the usage of a QoS proxy 26 with associated local policies embedded in an IP based network. The external interface 16 of the system shown in Figure 1 is not necessary in the IP based network of this embodiment. Instead a QoS proxy 26 is provided as a node within the IP flow. The QoS proxy 26 controls the QoS control 14, depicted as a dashed arrow pointing from the QoS proxy node 26 to the QoS control node 14. Local policies are associated to the QoS proxy node 26. Regarding the remaining elements of Figure 2, reference is made to the discussion with respect to Figure 1, which similarly applies to Figure 2.

In one preferred embodiment the complete signalling for initiation of an application service is based on IP protocols, e.g. on HTTP, SIP or TCP. The signalling between customer and application server usually goes through the same network segments as the IP data flows of the requested service. The QoS proxy functionality is implemented on a node within a network segment. It can be either collocated with a QoS enabler node or installed on a separate node. The QoS proxy is able to perform Deep Packet Inspection (DPI) in order to analyse the signalling of supported services in the network. Based on local policies associated with the QoS proxy functionality specific packet inspection classifiers are installed on the QoS proxy node.

In one embodiment a network operator can configure its local policies to understand signalling of applications A and B because providers of these applications have an agreement with the network operator regarding QoS support for these applications. Since the QoS proxy is operated and controlled by the network operator itself, no additional external interfaces need to be implemented by the QoS proxy. Instead of this, the QoS proxy can use proprietary interface to control the QoS control node that installs appropriate classifiers for QoS support on QoS enabler nodes.

In the case that required QoS cannot be supported in the network due to insufficient resources, e.g. insufficient bandwidth, the signalling between customer and application service can be modified on the fly by the QoS proxy in order to inform the customer about insufficient resources to establish the service in requested or adapted quality.

Installed classifiers for QoS support are deleted by the QoS proxy either after detection of signalling terminating the established application or after a timeout indicating no further IP packets of the application are exchanged in the network that assumes the established service is not more used, i.e. finished.

No additional external interfaces need to be implemented and supported in operator network while the basic signalling for supported applications as well as a proprietary interface towards QoS control node only has to be implemented on QoS proxy node. Since these are operator-intern implementations, the introduction of QoS support using QoS proxy solution is possible in the short-term rather than in the mid- or long-term.

In one preferred embodiment a network operator uses traffic shaping to limit maximal bandwidth available for customers. Available bandwidth is *Bav* and *Bav* is fairly distributed among all applications used by customers. Best Effort QoS class is then provided to all used applications. Streaming of video content to users is considered to be QoS enabled in the network. The maximal bandwidth provided for the prioritised application is *P* whereby *P<=Bav.* The streaming application service is defined as IP address *IP* and port number *n* of customer which are used to stream video data to the customer. If *IP* and *n* are known on the QoS control node as well as *P*, the QoS controller reconfigures QoS enabler nodes to shape the entire traffic destined to *IP*:*n* to *P* while the remaining traffic destined to *IP* is shaped to *Bav-P.* The QoS proxy node is used to determine the moment of time where a video stream is started and to inform the QoS control node about *IP:n* while *P* is stored in the local policy of the QoS proxy.
Alternatively P as well as further QoS parameters can be obtained using deep packet inspection. In one embodiment the required bandwidth based on the audio or video codec is derived.
HTTP requests are used by internet streaming services to transfer the signalling to establish a video stream. Thereby the final http request used to initiate streaming of a video content to the customer looks like "HTTP GET /videoplayback?..." for instance. This http request for video data then is sent from IP address *IP* and port *n* of customer which will be used as destination address for video data transfer performed by TCP. Hence, the QoS proxy function for this video streaming service is configured to search for http packets containing the above pattern and extracts the source IP address *IP* and the source port number *n* from this http request. The detected couple *IP:n* is then transferred to the QoS control node together with the information about P extracted from local policies. The transfer of this information from QoS proxy node to QoS control node differs depending on the implementation. After retrieving this information the QoS control node has the complete set of information necessary to initiate QoS support for the considered video streaming service initiated by the customer.

While the invention has been illustrated and described in detail in the drawings and foregoing description, such illustration and description are to be considered illustrative or exemplary and not restrictive.

## Claims

1. Method for triggering and/or enabling QoS support for selected applications in IP based networks comprising:
a. providing analysis of application signalling on a QoS proxy node (26) that controls a QoS control node (14) via an interface;
b. the QoS proxy node (26) is configured to intercept IP packets with signalling information used to control network services; and
c. the QoS proxy node (26) is configured to analyze intercepted IP packets in order to extract, to derive and to utilise signalling information of applications by means of IP packet classifiers and optionally applying deep packet inspection for certain IP packets, if needed,
**characterized by**
triggering the QoS control node (14) from the QoS proxy node (26) via the interface, and
controlling at least one QoS enabler node (15) performing QoS enforcement in the operator network by means of the QoS control node (14),
wherein the signalling between customer and another application peer is optionally modified by the QoS proxy node (26) in order to inform the customer about insufficient network resources to initiate new application sessions or to modify established application sessions in case the required/requested QoS level cannot be supported in the network due to the insufficient network resources, e.g. insufficient IP throughput for a customer.

2. Method according to claim 1, wherein this interface is either proprietary or standardized and/or wherein the interface is applied operator-intern or operator-extern to exchange control information with other operators or with application service providers.

3. Method according to claim 1 or 2, further comprising:
creating appropriate IP packet classifiers corresponding to a format of a message,
wherein the signalling of an application is preferably based on IP based protocols, e.g. HTTP, SIP or TCP.

4. Method according to any of claims 1 to 3, wherein IP packets with application signalling preferably go through same network segments, domains and network elements, e.g. IP routers or gateways as IP data flows of the requested network application.

5. Method according to any of claims 1 to 4, wherein the QoS proxy functionality is collocated with a QoS control node (14) or installed on a separate node.

6. Method according to any of claims 1 to 5, that further comprises:
a. providing specific packet inspection classifiers to the QoS proxy node (26) based on local policies associated with the QoS proxy functionality by means of installation on the QoS proxy node (26);
b. configuring the local policies by a network operator in accordance with an agreement with application providers regarding QoS support for these applications and/or in accordance with an agreement with customers to enable QoS support for their intentions; and
c. operating and controlling the QoS proxy node (26) by said configured policies.

7. Method according to any of claims 1 to 6, wherein
the QoS support execution and its associated policies are based on traffic engineering/management mechanisms and/or queuing policies.

8. Method according to claim 1 to 7,
wherein installed IP packet classifiers are deleted by the QoS proxy node (26) either after detection of signalling termination of an established application and/or after a timeout indicating that no further IP packets of the application are exchanged in the network and/or after a predefined time of IP packet classifier life cycle and/or based on signalling of termination of an established application session by an operator, application service provider or customer.

9. Method according to any of claims 1 to 8, wherein
a request of a prioritised application of a customer is searched for application specific patterns by means of deep packet inspection and/or additional QoS parameters may be obtained by deep packet inspection.

10. Method according to claim 9, wherein
information identifying IP flow/-s of application, preferably 5-tuple is extracted from signalling exchanged between customer and another application peer.

11. Method according to any of claims 1 to 10, wherein
the information about required QoS level, preferably, but not only limited to IP throughput, delay, jitter is either extracted from application signalling or from available policies, preferably according to application or to user type received from the operator, application service provider and/or customer.

12. Method according to claim 9 or 10, wherein
the information identifying IP flow/-s of established application sessions is transferred to the QoS control node (26) together with QoS requirements.

13. QoS proxy (26) comprising:
means being configured to provide analysis of application signalling on a QoS proxy node (26) for controlling a QoS control node (14) via an interface;
means being configured to intercept IP packets with signalling information used to control network services;
means being configured to analyze intercepted IP packets in order to extract, to derive and to utilise signalling information of applications by means of IP packet classifiers and optionally applying deep packet inspection for certain IP packets, if needed,
means configured to trigger the QoS control node (14) from the QoS proxy node (26) via an interface, and
means configured to control at least one QoS enabler node (15) performing QoS enforcement in the operator network by means of the QoS control node (14),
wherein the signalling between customer and another application peer is optionally modified by the QoS proxy node (26) in order to inform the customer about insufficient network resources to initiate new application sessions or to modify established application sessions in case the required/requested QoS level cannot be supported in the network due to the insufficient network resources, e.g. insufficient IP throughput for a customer.

14. QoS proxy according to claim 13, wherein this interface is either proprietary or standardized and/or wherein the interface is applied operator-intern or operator-extern to exchange control information with other operators or with application service providers.

15. System for performing a method according to any of claims 1 to 12 comprising:
a. QoS proxy node (26) according to claim 13 or 14;
b. QoS control node (14); and
at least one QoS enabler node (15) that is controlled by the QoS control node (26).

## Patentansprüche

1. Verfahren zum Auslösen und/oder Aktivieren einer QoS-Unterstützung für ausgewählte Anwendungen in IP-basierten Netzen, welches Folgendes aufweist:
a. Bereitstellen einer Analyse der Anwendungssignalisierung an einem QoS-Proxy-Knoten (26), der einen QoS-Steuerknoten (14) steuert, über eine Schnittstelle,
b. der QoS-Proxy-Knoten (26) ist dafür ausgelegt, IP-Pakete mit Signalisierungsinformationen, die zum Steuern von Netzdiensten verwendet werden, abzufangen, und
c. der QoS-Proxy-Knoten (26) ist dafür ausgelegt, abgefangene IP-Pakete zu analysieren, um Signalisierungsinformationen von Anwendungen durch IP-Paketklassifizierer zu extrahieren, abzuleiten und zu verwenden, und optional eine tiefe Paketinspektion für bestimmte IP-Pakete anzuwenden, falls dies erforderlich ist,
**gekennzeichnet durch**
Auslösen des QoS-Steuerknotens (14) vom QoS-Proxy-Knoten (26) über die Schnittstelle und
Steuern wenigstens eines QoS-Aktvierungsknotens (15), der eine QoS-Durchsetzung im Betreibernetz ausführt, durch den QoS-Steuerknoten (14),
wobei die Signalisierung zwischen einem Kunden und einem anderen Anwendungs-Peer optional durch den QoS-Proxy-Knoten (26) modifiziert wird, um den Kunden über unzureichende Netzressourcen für das Einleiten neuer Anwendungssitzungen oder für das Modifizieren eingerichteter Anwendungssitzungen zu informieren, falls die benötigte/angeforderte QoS-Ebene infolge unzureichender Netzressourcen, beispielsweise eines unzureichenden IP-Durchsatzes für einen Kunden, im Netz nicht unterstützt werden kann.

2. Verfahren nach Anspruch 1, wobei diese Schnittstelle entweder proprietär oder standardisiert ist und/oder wobei die Schnittstelle betreiberintern oder betreiberextern angewendet wird, um Steuerinformationen mit anderen Betreibern oder mit Anwendungsdienstanbietern auszutauschen.

3. Verfahren nach Anspruch 1 oder 2, welches ferner Folgendes aufweist:
Erzeugen geeigneter IP-Paketklassifizierer entsprechend dem Format einer Nachricht, wobei die Signalisierung einer Anwendung vorzugsweise auf IP-basierten Protokollen, beispielsweise HTTP, SIP oder TCP, beruht.

4. Verfahren nach einem der Ansprüche 1 bis 3, wobei IP-Pakete mit Anwendungssignalisierung vorzugsweise durch dieselben Netzsegmente, Domänen und Netzelemente, beispielsweise IP-Router oder -Gateways, wie IP-Datenflüsse der angeforderten Netzanwendung, laufen.

5. Verfahren nach einem der Ansprüche 1 bis 4, wobei sich die QoS-Proxy-Funktionalität am gleichen Ort wie ein QoS-Steuerknoten (14) befindet oder auf einem getrennten Knoten installiert ist.

6. Verfahren nach einem der Ansprüche 1 bis 5, welches ferner Folgendes aufweist:
a. Bereitstellen spezifischer Paketinspektionsklassifizierer für den QoS-Proxy-Knoten (26) auf der Grundlage lokaler Richtlinien in Zusammenhang mit der QoS-Proxy-Funktionalität durch Installation auf dem QoS-Proxy-Knoten (26),
b. Konfigurieren der lokalen Richtlinien durch einen Netzbetreiber entsprechend einer Vereinbarung mit Anwendungsanbietern in Bezug auf die QoS-Unterstützung für diese Anwendungen und/oder entsprechend einer Vereinbarung mit Kunden, um eine QoS-Unterstützung für ihre Absichten zu ermöglichen, und
c. Betreiben und Steuern des QoS-Proxy-Knotens (26) durch die konfigurierten Richtlinien.

7. Verfahren nach einem der Ansprüche 1 bis 6, wobei
die QoS-Unterstützungsausführung und die zugeordneten Richtlinien auf Verkehrssteuerungs/-verwaltungsmechanismen und/oder Warteschlangeneinreihungsrichtlinien beruhen.

8. Verfahren nach den Ansprüchen 1 bis 7,
wobei installierte IP-Paketklassifizierer durch den QoS-Proxy-Knoten (26) entweder nach der Erkennung eines Signalisierungsabschlusses einer eingerichteten Anwendung und/oder nach einem Zeitablauf, der angibt, dass keine weiteren IP-Pakete der Anwendung im Netz ausgetauscht werden, und/oder nach einer vordefinierten Zeit eines IP-Paketklassifizierer-Lebenszyklus und/oder auf der Grundlage einer Signalisierung des Abschlusses einer eingerichteten Anwendungssitzung durch einen Betreiber, Anwendungsdienstanbieter oder Kunden gelöscht werden.

9. Verfahren nach einem der Ansprüche 1 bis 8, wobei eine Anforderung einer priorisierten Anwendung eines Kunden durch tiefe Paketinspektion auf anwendungsspezifische Muster durchsucht wird und/oder zusätzliche QoS-Parameter durch tiefe Paketinspektion erhalten werden können.

10. Verfahren nach Anspruch 9, wobei
Informationen, welche einen oder mehrere IP-Anwendungsflüsse identifizieren, vorzugsweise 5-Tupel, aus einer zwischen dem Kunden und einem anderen Anwendungs-Peer ausgetauschten Signalisierung extrahiert werden.

11. Verfahren nach einem der Ansprüche 1 bis 10, wobei
die Informationen über die erforderliche QoS-Ebene, vorzugsweise aber nicht ausschließlich auf IP-Durchsatz, Verzögerung, Schwankungen beschränkt, entweder aus der Anwendungssignalisierung oder aus verfügbaren Richtlinien, vorzugsweise entsprechend der Anwendung oder dem Benutzertyp, die vom Betreiber, vom Anwendungsdienstanbieter und/oder vom Kunden empfangen werden, extrahiert werden.

12. Verfahren nach Anspruch 9 oder 10, wobei
die Informationen, welche einen oder mehrere IP-Flüsse eingerichteter Anwendungssitzungen identifizieren, zusammen mit QoS-Anforderungen zum QoS-Steuerknoten (26) übertragen werden.

13. QoS-Proxy (26), welcher Folgendes aufweist:
Mittel, die dafür ausgelegt sind, eine Analyse der Anwendungssignalisierung an einem QoS-Proxy-Knoten (26) zum Steuern eines QoS-Steuerknotens (14) über eine Schnittstelle bereitzustellen,
Mittel, die dafür ausgelegt sind, IP-Pakete mit Signalisierungsinformationen, die zum Steuern von Netzdiensten verwendet werden, abzufangen,
Mittel, die dafür ausgelegt sind, abgefangene IP-Pakete zu analysieren, um Signalisierungsinformationen von Anwendungen durch IP-Paketklassifizierer zu extrahieren, abzuleiten und zu verwenden, und optional eine tiefe Paketinspektion für bestimmte IP-Pakete anzuwenden, falls dies erforderlich ist,
Mittel, die dafür ausgelegt sind, den QoS-Steuerknoten (14) vom QoS-Proxy-Knoten (26) über eine Schnittstelle auszulösen, und
Mittel, die dafür ausgelegt sind, wenigstens einen QoS-Aktvierungsknoten (15), der eine QoS-Durchsetzung im Betreibernetz ausführt, durch den QoS-Steuerknoten (14) zu steuern,
wobei die Signalisierung zwischen einem Kunden und einem anderen Anwendungs-Peer optional durch den QoS-Proxy-Knoten (26) modifiziert wird, um den Kunden über unzureichende Netzressourcen für das Einleiten neuer Anwendungssitzungen oder für das Modifizieren eingerichteter Anwendungssitzungen zu informieren, falls die benötigte/angeforderte QoS-Ebene infolge unzureichender Netzressourcen, beispielsweise eines unzureichenden IP-Durchsatzes für einen Kunden, im Netz nicht unterstützt werden kann.

14. QoS-Proxy nach Anspruch 13, wobei diese Schnittstelle entweder proprietär oder standardisiert ist und/oder wobei die Schnittstelle betreiberintern oder betreiberextern angewendet wird, um Steuerinformationen mit anderen Betreibern oder mit Anwendungsdienstanbietern auszutauschen.

15. System zum Ausführen eines Verfahrens nach einem der Ansprüche 1 bis 12, welches Folgendes aufweist:
a. den QoS-Proxy-Knoten (26) nach Anspruch 13 oder 14,
b. den QoS-Steuerknoten (14) und
wenigstens einen QoS-Aktivierungsknoten (15), der durch den QoS-Steuerknoten (26) gesteuert wird.

## Revendications

1. Procédé de déclenchement et/ou d'activation de support de QS pour des applications sélectionnées dans des réseaux IP comprenant :
a. la fourniture d'une analyse de signalisation d'application sur un noeud mandataire de QS (26) qui commande un noeud de commande de QS (14) via une interface ;
b. le noeud mandataire de QS (26) est configuré pour intercepter des paquets IP avec des informations de signalisation utilisées pour commander des services de réseau ; et
c. le noeud mandataire de QS (26) est configuré pour analyser des paquets IP interceptés afin d'extraire, de dériver et d'utiliser des informations de signalisation d'applications au moyen de classifieurs de paquets IP et facultativement l'application d'une inspection approfondie de paquets pour certains paquets IP, si nécessaire,
**caractérisé par**
le déclenchement du noeud de commande de QS (14) à partir du noeud mandataire de QS (26) via l'interface, et
la commande d'au moins un noeud activateur de QS (15) réalisant une mise en oeuvre de QS dans le réseau opérateur au moyen du noeud de commande de QS (14),
dans lequel la signalisation entre un client et un autre homologue d'application est facultativement modifiée par le noeud mandataire de QS (26) afin d'informer le client à propos des ressources réseaux insuffisantes pour lancer de nouvelles sessions d'application ou pour modifier des sessions d'application établies dans le cas où le niveau de QS requis/demandé ne peut pas être pris en charge dans le réseau en raison des ressources réseaux insuffisantes, par exemple un débit IP insuffisant pour un client.

2. Procédé selon la revendication 1, dans lequel cette interface est soit propriétaire soit standardisée et/ou dans lequel l'interface est appliquée en interne par l'opérateur ou en externe de l'opérateur pour échanger des informations de commande avec d'autres opérateurs ou avec des fournisseurs de services d'application.

3. Procédé selon la revendication 1 ou 2, comprenant en outre :
la création de classifieurs de paquets IP appropriés correspondant à un format d'un message,
dans lequel la signalisation d'une application est de préférence basée sur des protocoles IP, par exemple, HTTP, SIP ou TCP.

4. Procédé selon l'une quelconque des revendications 1 à 3, dans lequel des paquets IP avec une signalisation d'application passent de préférence à travers des segments de réseau, des domaines et des éléments de réseau identiques, par exemple des routeurs IP ou des passerelles en tant que flux de données IP de l'application de réseau demandée.

5. Procédé selon l'une quelconque des revendications 1 à 4, dans lequel la fonctionnalité de mandataire de QS est colocalisée avec un noeud de commande de QS (14) ou installée sur un noeud séparé.

6. Procédé selon l'une quelconque des revendications 1 à 5, qui comprend en outre :
a. la fourniture de classifieurs d'inspection de paquets spécifiques au noeud mandataire de QS (26) d'après des règles locales associées à la fonctionnalité de mandataire de QS par installation sur le noeud mandataire de QS (26) ;
b. la configuration des règles locales par un opérateur de réseau conformément à un accord avec des fournisseurs d'applications concernant un support de QS pour ces applications et/ou conformément à un accord avec des clients afin de permettre un support de QS à leur intention ; et
c. le fonctionnement et la commande du noeud mandataire de QS (26) par lesdites règles configurées.

7. Procédé selon l'une quelconque des revendications 1 à 6, dans lequel
l'exécution de support de QS et ses règles associées sont basées sur des mécanismes d'ingénierie/de gestion de trafic et/ou des règles de mise en file d'attente.

8. Procédé selon les revendications 1 à 7,
dans lequel des classifieurs de paquets IP installés sont supprimés par le noeud mandataire de QS (26) après détection d'une fin de signalisation d'une application établie et/ou après un délai d'attente indiquant qu'aucun paquet IP supplémentaire de l'application n'est échangé dans le réseau et/ou après un temps prédéfini de cycle de vie de classifieurs de paquets IP et/ou d'après une signalisation de fin d'une session d'application établie par un opérateur, un fournisseur de services d'application ou un client.

9. Procédé selon l'une quelconque des revendications 1 à 8, dans lequel
une demande d'une application priorisée d'un client est recherchée pour des schémas spécifiques d'application au moyen d'une inspection approfondie de paquets et/ou des paramètres de QS supplémentaires peuvent être obtenus par une inspection approfondie de paquets.

10. Procédé selon la revendication 9, dans lequel
des informations identifiant un ou des flux IP d'application, de préférence un quintuplet est extrait d'une signalisation échangée entre un client et un autre homologue d'application.

11. Procédé selon l'une quelconque des revendications 1 à 10, dans lequel
les informations concernant un niveau de QS requis, de préférence, mais non limitées à un débit IP, un retard, une gigue sont soit extraites d'une signalisation d'application, soit de règles disponibles, de préférence selon l'application ou le type d'utilisateur reçu en provenance de l'opérateur, le fournisseur de services d'application et/ou le client.

12. Procédé selon la revendication 9 ou 10, dans lequel
les informations identifiant un ou des flux IP de sessions d'application établies sont transférées au noeud de commande de QS (26) conjointement avec les exigences de QS.

13. Mandataire de QS (26) comprenant :
un moyen configuré pour fournir une analyse de signalisation d'application sur un noeud mandataire de QS (26) pour commander un noeud de commande de QS (14) via une interface ;
un moyen configuré pour intercepter des paquets IP avec des informations de signalisation utilisées pour commander des services de réseau ;
un moyen configuré pour analyser des paquets IP interceptés afin d'extraire, de dériver et d'utiliser des informations de signalisation d'applications au moyen de classifieurs de paquets IP et facultativement en appliquant une inspection approfondie de paquets pour certains paquets IP, si nécessaire,
un moyen configuré pour déclencher le noeud de commande de QS (14) à partir du noeud mandataire de QS (26) via une interface, et
un moyen configuré pour commander au moins un noeud activateur de QS (15) réalisant une mise en oeuvre de QS dans le réseau opérateur au moyen du noeud de commande de QS (14),
dans lequel la signalisation entre le client et un autre homologue d'application est facultativement modifiée par le noeud mandataire de QS (26) afin d'informer le client à propos des ressources réseaux insuffisantes pour lancer de nouvelles sessions d'application ou pour modifier des sessions d'application établies dans le cas où le niveau de QS requis/demandé ne peut pas être pris en charge dans le réseau en raison des ressources réseaux insuffisantes, par exemple un débit IP insuffisant pour un client.

14. Mandataire de QS selon la revendication 13, dans lequel cette interface est soit propriétaire soit standardisée et/ou dans lequel l'interface est appliquée en interne par l'opérateur ou en externe de l'opérateur pour échanger des informations de commande avec d'autres opérateurs ou avec des fournisseurs de services d'application.

15. Système de réalisation d'un procédé selon l'une quelconque des revendications 1 à 12, comprenant :
a. un noeud mandataire de QS (26) selon la revendication 13 ou 14 ;
b. un noeud de commande de QS (14) ; et
au moins un noeud activateur de QS (15) qui est commandé par le noeud de commande de QS (26).
